# EUROPÄISCHE PATENTSCHRIFT

(11) **EP 3 355 452 B1**
(45) Veröffentlichungstag und Bekanntmachung des Hinweises auf die Patenterteilung: **11.08.2021**
(21) Anmeldenummer: 18153974.3
(22) Anmeldetag: 29.01.2018
(51) Int. Cl.: H02K 9/06, H02K 9/22

(54) **ROTORAUFBAU MIT AXIALABDECKUNG**
ROTOR ASSEMBLY WITH AXIAL COVER
STRUCTURE DE ROTOR POURVUE DE COUVERCLE AXIAL

(30) Priorität: 30.01.2017 DE 102017101773
(43) Veröffentlichungstag der Anmeldung: 01.08.2018
(73) Patentinhaber: ebm-papst Mulfingen GmbH & Co. KG, 74673 Mulfingen (DE)
(72) Erfinder: STURM, Michael, 97980 Bad Mergentheim-Rot (DE)
(74) Vertreter: Staeger & Sperling Partnerschaftsgesellschaft mbB

(56) Entgegenhaltungen:
- EP-A1- 2 429 067
- DE-A1-102012 220 239
- DE-T5-112012 004 272
- JP-A- 2010 124 534
- US-A1- 2003 113 209
- US-A1- 2005 008 483

## Beschreibung

Die Erfindung betrifft einen Rotoraufbau eines Elektromotors mit einem Kühlkörper, an dessen axialer Stirnseite eine Abdeckung zur Erzeugung eines Kühlluftkanals angeordnet ist.

Aus dem Stand der Technik sind Rotoren von Elektromotoren mit angegossenem, umspritztem oder aufgeschraubtem Kühlkörper (teilweise oder voll umgossener Rotor) bekannt. Der Kühlkörper ist ein im Wesentlichen zylindrisches Bauteil, welches die Rotorbauteile umschließt. Bekannt ist ferner, den Kühlkörper auf seiner axialen Stirnseite mit radial verlaufenden Kühlstegen zu versehen. Die radialen Kühlstege sorgen für eine hohe Kühlleistung im Umfangsbereich. Problematisch ist jedoch, dass bei der Rotation des Rotoraufbaus mit dem Kühlkörper im axialen Zentrum der Kühlstege praktisch keine Luftbewegung (Totpunkt) erfolgt und die Kühlung dort entsprechend unbefriedigend ist.

Ein Rotoraufbau eines Elektromotors mit Kühlkanäle bildenden, stirnseitig angeordneten Kühlstegen, durch welche ein Kühlluftstrom bei einer Rotation des Rotoraufbaus durch eine düsenförmige Einlauföffnung einer Abdeckung erzeugt wird, ist aus dem Dokument US 2005/008483 A1 bereits bekannt.

Die Schrift JP 2010 124534 A offenbart zudem einen alternativen Rotoraufbau, bei welchem ein Kühlluftstrom bei einer Rotation des Rotoraufbaus durch eine Einlauföffnung einer Abdeckung angesaugt wird. Weiterer druckschriftlicher Stand der Technik des vorliegenden technischen Gebietes ist offenbart in den Dokumenten US 2003/113209 A1, DE 10 2012 220 239 A1, DE 11 2012 004 272 T5 und EP 2 429 067 A1.

Der Erfindung liegt deshalb die Aufgabe zugrunde, die Kühlung am Kühlkörper eines Rotoraufbaus von Elektromotoren zu verbessern.

Diese Aufgabe wird durch die Merkmalskombination gemäß Anspruch 1 gelöst.

Erfindungsgemäß wird ein Rotoraufbau eines Elektromotors gemäß Anspruch 1 vorgeschlagen, mit einem Kühlkörper, an dessen axialer Stirnseite zumindest eine Abdeckung mit einer axialen Einlauföffnung angeordnet ist. Zwischen dem Kühlkörper und der Abdeckung verlaufen Kühlstege, die zwischen sich, der axialen Stirnseite des Kühlkörpers und der Abdeckung jeweils einen Kühlkanal ausbilden, so dass bei einer Rotation des Rotoraufbaus ein Kühlluftstrom von der Einlauföffnung der Abdeckung durch den Kühlkanal ermöglicht ist. Während der Rotation wird durch die Kombination aus Abdeckung und Kühlstegen ein aktiver Kühlluftstrom über die axiale Einlauföffnung durch den Kühlkanal erzeugt, der die Wärme auch aus dem axialen Zentrum nach radial außen leitet. Die Wärmeabgabe an die Umgebung und somit die Kühlleistung werden mithin gesteigert.

Erfindungsgemäß ist vorgesehen, dass die Abdeckung als konzentrische Einlaufdüse ausgebildet ist, wobei sie sich im Bereich eines die Einlauföffnung aufweisenden Einlauföffnungsabschnitts zumindest abschnittsweise axial eingezogen erstreckt und sich dabei die Querschnittsfläche des Einlauföffnungsabschnitts zur Einlauföffnung hin verringert. Die Düsenform vergrößert die Ansaugleistung durch die Einlauföffnung der Abdeckung und steigert die Kühlleistung zusätzlich.

Aus geometrischer Sicht ist eine Ausführung günstig, bei der eine axiale Höhe der Kühlstege größer ist als eine axiale Höhe des Einlauföffnungsabschnitts. Insbesondere wird bevorzugt, dass die axiale Höhe der Kühlstege zumindest eineinhalb Mal so groß ist wie die axiale Höhe des Einlauföffnungsabschnitts.

Die Strömung der Kühlluft wird ferner positiv beeinflusst durch eine Ausbildung, bei der die Abdeckung einen an ihren radialen Außenrand angrenzenden Ausblasabschnitt aufweist, der gerade nach radial außen verläuft.

Zudem wird in einer Ausführungsvariante vorgesehen, dass der radiale Außenrand der Abdeckung mit einer radialen Außenkante der Kühlstege fluchtet.

Die Kühlstege sind erfindungsgemäß an ihren axialen, zur Abdeckung weisenden Stirnseiten zumindest abschnittsweise abgekantet oder abgerundet ausgebildet, so dass sich ihre jeweilige Axialerstreckung zumindest in diesem Bereich verringert. Zusätzlich ist die Abdeckung in diesem Bereich axial in Richtung der Kühlstege eingezogen ausgebildet, so dass der Abstand zwischen den Kühlstegen und der Abdeckung gering ist oder die Abdeckung stets an den Kühlstegen anliegt.

Zur Gewährleistung einer hohen Kühlleistung verlaufen die Kühlstege zumindest in einer äußeren radialen Hälfte des Kühlkörpers.

Die Verbindung zwischen Kühlkörper und Abdeckung kann auf mehrere Weisen erfolgen. Die Kühlstege sind entweder einteilig an der Abdeckung oder an der axialen Stirnseite des Kühlkörpers ausgebildet. An dem Kühlkörper können die Kühlstege z.B. mit angespritzt/angegossen werden. Die Abdeckung selbst wird ebenfalls einteilig mit dem Kühlkörper ausgebildet oder daran befestigt, beispielsweise über Schrauben oder Kleben.

Ferner ist eine Ausführung vorteilhaft, bei der die Abdeckung die Kühlstege in einer axialen Draufsicht vollständig überdeckt.

Die Kühlstege werden in einer ersten Lösung als in radialer Richtung geradlinig verlaufende Kühlrippen ausgebildet. In einer alternativen Variante sind es drehrichtungsorientiert verlaufende Kühlschaufeln. Eine strömungstechnisch günstige Lösung sieht dabei vor, dass die drehrichtungsorientierten Kühlschaufeln in einer axialen Draufsicht sichelförmig sind.

Ferner ist eine Ausführung des Rotoraufbaus günstig, bei der der Kühlkörper an seiner axialen Stirnseite zumindest eine, insbesondere jedoch eine Vielzahl von Öffnungen aufweist, die mit dem Kühlkanal strömungsverbunden ist. Somit kann der Kühlluftstrom nicht nur außenseitig entlang des Kühlkörpers strömen, sondern auch eine zusätzliche Strömung aus dem Rotorinneren nach außen erfolgen.

Als weitere geometrische vorteilhafte Größe wird in einer Variante vorgesehen, dass ein Durchmesser der Abdeckung kleiner oder gleich ist als ein Durchmesser des Kühlkörpers.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Explosionsdarstellung eines Rotoraufbaus an einen Elektromotor;
- Fig. 2: eine Detailschnittansicht des Rotoraufbaus aus Fig. 1 im montierten Zustand;
- Fig. 3: einen Kühlkörper des Rotoraufbaus in einer alternativen Ausführung.

In den Figuren zeigen gleiche Bezugszeichen gleiche Teile in allen Ansichten.

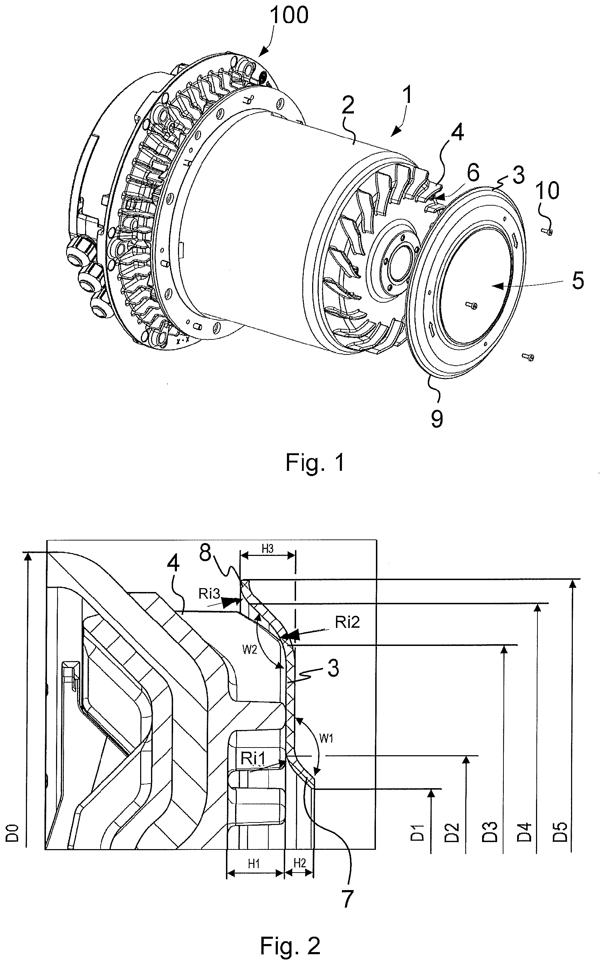

In Figur 1 ist ein Rotoraufbau 1 an einem Elektromotor 100 in einer Explosionsdarstellung dargestellt. Der Rotoraufbau 1 umfasst einen im Wesentlichen zylindrischen, die Rotorbauteile des Elektromotors 100 bestimmenden Bauteile umschließenden Kühlkörper 2, an dessen axialer Stirnseite einteilig eine Vielzahl von Kühlstegen 4 ausgebildet ist, die als drehrichtungsorientierte und in einer axialen Draufsicht gesehen sichelförmige Kühlschaufeln ausgebildet sind.

Auf den Kühlstegen 4 ist die Abdeckung 3 mit axialer Einlauföffnung 5 über Schrauben 10 befestigt, so dass zwischen den einzelnen Kühlstegen 4, der axialen Stirnseite des Kühlkörpers 2 und der Abdeckung 2 jeweils ein Kühlkanal 6 ausgebildet ist. Über den jeweiligen Kühlkanal 6 kann bei einer Rotation des Rotoraufbaus 1 ein Kühlluftstrom von der Einlauföffnung 5 der Abdeckung 3 durch den Kühlkanal 6 nach radial außen erfolgen.

Die Abdeckung 3 ist als konzentrische Einlaufdüse ausgebildet und weist einen axial über einen Radius Ri1 eingezogenen nach axial außen gerichteten Einlauföffnungsabschnitts 7 auf, dessen Querschnittsfläche sich zur Einlauföffnung 5 hin verringert. Der Radius Ri1 liegt im Bereich zwischen 2/100 und 5/100 des Durchmessers D0 (Rotoraußendurchmesser). Der sich an den radialen Außenrand 9 anschließende Ausblasabschnitt 8 verläuft nach radial außen gerade. Dazwischen ist die Abdeckung 3 geschwungen ausgebildet. Der dazwischen liegende Übergang erfolgt im Radius Ri3, der im Bereich von 10/500 bis 50/500 des Außendurchmessers D0 des Kühlkörpers 2 bzw. Rotors liegt. Die Kühlstege 4 sind an ihren axialen, zur Abdeckung 3 weisenden Stirnseiten abschnittsweise abgekantet, wobei die Abdeckung 3 im Bereich der Abkantung einen Radius Ri2 aufweist und mithin axial in Richtung der Kühlstege 4 eingezogen ausgebildet ist. Der axiale Einzug erfolgt im Winkel W2, angepasst an die Geometrie bzw. Abkantung der Kühlstege 4. Die axiale Höhe H1 der Kühlstege 4 ist größer als die axiale Höhe H2 des Einlauföffnungsabschnitts 7. Der Übergang von dem Einlauföffnungsabschnitt 7 zu dem angrenzenden Bereich der Abdeckung erfolgt in einem Winkel W1, der kleiner ist als 135°.

Der Durchmesser D2 am radialen Ende des Einlauföffnungsabschnitts 7 fluchtet axial mit dem radial innen liegenden Ende der Kühlstege 4. Der Durchmesser D3 fluchtet mit dem Randabschnitt der Kühlstege 4, bei dem die Abkantung beginnt, der Durchmesser D4 mit dem radialen Ende der Abkantung. Der Durchmesser D5 bestimmt den Außendurchmesser der Abdeckung 3 und ist geringer als der Durchmesser D0 des Kühlkörpers 2. In der gezeigten Ausführung überstreckt die Abdeckung 3 die Kühlstege 4 in radialer Richtung Die axiale Höhe H3 der Abdeckung 3 im Ausblasabschnitt 8 ist so gewählt, dass die axiale zu den Kühlstegen 4 weisende Seite mit dem radialen Außenabschnitt des abgekanteten Abschnitts der Kühlstege 4 fluchtet.

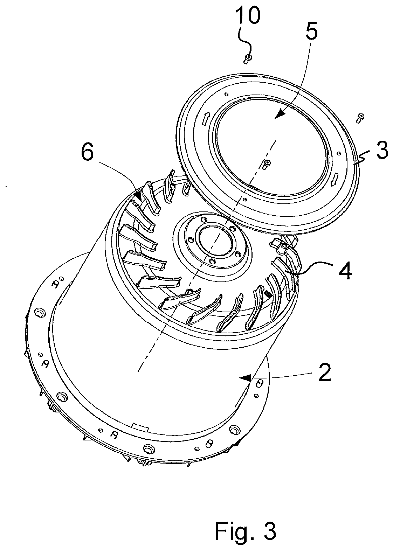

Fig. 3 zeigt einen Kühlkörper 2 des Rotoraufbaus 1 aus Figur 1 in einer alternativen Ausführung, wobei sich die Kühlstege 4 mit axial konstanter Höhe nach radial außen und drehrichtungsabhängig erstrecken. Im Übrigen gelten die Merkmale aus den Figuren 1 und 2 auch für diese Ausführungsvariante als offenbart. In einer nicht-gezeigten alternativen Ausführung verlaufen die Kühlstege 4 als Kühlrippen geradlinig von radial innen nach radial außen.

## Patentansprüche

1. Rotoraufbau (1) eines Elektromotors umfassend einen zylindrischen Kühlkörper (2), wobei der Kühlkörper (2) Rotorbauteile des Elektromotors umschließt und an dem Kühlkörper (2) an einer axialen Stirnseite zumindest eine Abdeckung (3) mit einer axialen Einlauföffnung (5) angeordnet ist und zwischen dem Kühlkörper (2) und der Abdeckung (3) Kühlstege (4) verlaufen, die zwischen sich, der axialen Stirnseite des Kühlkörpers (2) und der Abdeckung (2) jeweils einen radial nach außen verlaufenden Kühlkanal (6) ausbilden, so dass bei einer Rotation des Rotoraufbaus (1) ein radial nach außen verlaufender Kühlluftstrom von der Einlauföffnung (5) der Abdeckung (3) durch den Kühlkanal (6) ermöglicht ist, wobei die Abdeckung (3) als konzentrische Einlaufdüse ausgebildet ist, und wobei sie sich im Bereich eines die Einlauföffnung (5) aufweisenden Einlauföffnungsabschnitts (7) zumindest abschnittsweise axial nach außen eingezogen erstreckt und sich dabei die Querschnittsfläche des Einlauföffnungsabschnitts (7) zur Einlauföffnung (4) hin verringert, wobei
die Kühlstege (4) an ihren axialen, zur Abdeckung (3) weisenden Stirnseiten zumindest abschnittsweise in ihrem radial äußeren Randbereich abgekantet oder abgerundet ausgebildet sind, so dass sich ihre jeweilige Axialerstreckung zumindest in diesem Bereich verringert, und wobei die Abdeckung (3) in diesem Bereich axial nach innen in Richtung der Kühlstege (4) und angepasst an die Geometrie der Kühlstege (4) eingezogen ausgebildet ist.

2. Rotoraufbau nach Anspruch 1, **dadurch gekennzeichnet, dass** eine axiale Höhe (H1) der Kühlstege (4) größer ist als eine axiale Höhe (H2) des Einlauföffnungsabschnitts.

3. Rotoraufbau nach einem der vorigen Ansprüche, **dadurch gekennzeichnet, dass** die Abdeckung (3) einen an ihren radialen Außenrand (9) angrenzenden Ausblasabschnitt (8) aufweist, der gerade nach radial außen verläuft.

4. Rotoraufbau nach dem vorigen Anspruch, **dadurch gekennzeichnet, dass** der radiale Außenrand (9) der Abdeckung (3) mit einer radialen Außenkante der Kühlstege (4) fluchtet.

5. Rotoraufbau nach einem der vorigen Ansprüche, **dadurch gekennzeichnet, dass** die Kühlstege (4) zumindest in einer äußeren radialen Hälfte des Kühlkörpers (2) verlaufen.

6. Rotoraufbau nach einem der vorigen Ansprüche, **dadurch gekennzeichnet, dass** die Kühlstege (4) einteilig an der Abdeckung (3) oder an der axialen Stirnseite des Kühlkörpers (2) ausgebildet sind.

7. Rotoraufbau nach einem der vorigen Ansprüche, **dadurch gekennzeichnet, dass** die Abdeckung (3) die Kühlstege (4) in einer axialen Draufsicht vollständig überdeckt.

8. Rotoraufbau nach einem der vorigen Ansprüche, **dadurch gekennzeichnet, dass** die Kühlstege (4) als in radialer Richtung geradlinig verlaufende Kühlrippen oder als drehrichtungsorientiert verlaufende Kühlschaufeln ausgebildet sind.

9. Rotoraufbau nach dem vorigen Anspruch, **dadurch gekennzeichnet, dass** die drehrichtungsorientierten Kühlschaufeln in einer axialen Draufsicht sichelförmig sind.

10. Rotoraufbau nach einem der vorigen Ansprüche, **dadurch gekennzeichnet, dass** der Kühlkörper (2) an seiner axialen Stirnseite zumindest eine, insbesondere jedoch eine Vielzahl von Öffnungen aufweist, die mit dem Kühlkanal (6) strömungsverbunden ist.

11. Rotoraufbau nach einem der vorigen Ansprüche, **dadurch gekennzeichnet, dass** ein Durchmesser (D5) der Abdeckung (3) kleiner oder gleich ist als ein Durchmesser des Kühlkörpers (2) oder Rotoraufbaus.

## Claims

1. A rotor assembly (1) of an electric motor comprising a cylindrical heat sink (2), wherein the heat sink (2) encloses rotor components of the electric motor, and at least one cover (3) with an axial inlet opening (5) is arranged on the heat sink (2) on an axial end face, and cooling webs (4) extend between the heat sink (2) and the cover (3), which cooling webs (4) respectively form, between themselves, the axial end face of the heat sink (2), and the cover (2), a radially outwardly extending cooling channel (6), thereby enabling a radially outwardly extending cooling air flow to occur from the inlet opening (5) of the cover (3) through the cooling channel (6) when the rotor assembly (1) rotates, wherein the cover (3) is embodied as a concentric inlet nozzle, and wherein it extends in the vicinity of an inlet opening section (7) having the inlet opening (5) so as to be retracted axially outward at least in sections, thereby reducing the cross-sectional area of the inlet opening section (7) toward the inlet opening (4),
wherein the cooling webs (4) are bent or rounded at least in sections in their radially outer edge region on their axial end faces facing toward the cover (3), so that their respective axial extension is reduced at least in this region, and wherein the cover (3) is embodied in this region so as to be retracted axially inward in the direction of the cooling webs (4) and adapted to the geometry of the cooling webs (4).

2. The rotor assembly as set forth in claim 1, **characterized in that** an axial height (H1) of the cooling webs (4) is greater than an axial height (H2) of the inlet opening section.

3. The rotor assembly as set forth in one of the preceding claims, **characterized in that** the cover (3) has a blow-out section (8) that is adjacent to its radial outer edge (9) and extends radially straight outward.

4. The rotor assembly as set forth in the preceding claim, **characterized in that** the radial outer edge (9) of the cover (3) is aligned with a radial outer edge of the cooling webs (4).

5. The rotor assembly as set forth in one of the preceding claims, **characterized in that** the cooling webs (4) extend at least in an outer radial half of the cooling body (2).

6. The rotor assembly as set forth in one of the preceding claims, **characterized in that** the cooling webs (4) are integrally formed on the cover (3) or on the axial end face of the cooling body (2).

7. The rotor assembly as set forth in one of the preceding claims, **characterized in that** the cover (3) completely covers the cooling webs (4) in an axial plan view.

8. The rotor assembly as set forth in one of the preceding claims, **characterized in that** the cooling webs (4) are embodied as cooling ribs that extend in a straight line in the radial direction or as cooling blades that extend in the direction of rotation.

9. The rotor assembly as set forth in the preceding claim, **characterized in that** the cooling blades oriented in the direction of rotation are sickle-shaped in an axial plan view.

10. The rotor assembly as set forth in one of the preceding claims, **characterized in that** the cooling body (2) has at least one, but in particular a plurality of openings on its axial end face, which openings are in fluid communication with the cooling channel (6).

11. The rotor assembly as set forth in one of the preceding claims, **characterized in that** a diameter (D5) of the cover (3) is smaller than or equal to a diameter of the cooling body (2) or rotor assembly.

## Revendications

1. Ensemble de rotor (1) d'un moteur électrique, comprenant un dissipateur thermique cylindrique (2), dans lequel le dissipateur thermique (2) entoure des composants de rotor du moteur électrique, et sur le dissipateur thermique (2), sur une face frontale axiale, au moins un recouvrement (3) doté d'une ouverture d'entrée axiale (5) est disposé sur le dissipateur thermique (2), et entre le dissipateur thermique (2) et le recouvrement (3) s'étendent des ailettes de refroidissement (4) qui réalisent entre elles, la face frontale axiale du dissipateur thermique (2) et le recouvrement (2) respectivement un canal de refroidissement (6) s'étendant radialement vers l'extérieur de sorte qu'en cas de rotation de l'ensemble de rotor (1), un courant d'air de refroidissement s'étendant radialement vers l'extérieur à partir de l'ouverture d'entrée (5) du recouvrement (3) est rendu possible à travers le canal de refroidissement (6), dans lequel le recouvrement (3) est réalisé sous forme de buse d'entrée concentrique et s'étend au moins par endroits en retrait axialement vers l'extérieur dans la zone d'une partie d'ouverture d'entrée (7) présentant l'ouverture d'entrée (5), la superficie de section transversale de la partie d'ouverture d'entrée (7) se rétrécissant vers l'ouverture d'entrée (4),
les ailettes de refroidissement (4) étant réalisées de manière chanfreinée ou arrondie au niveau de leurs faces frontales axiales, tournées vers le recouvrement (3), par endroits dans leur zone marginale radialement extérieure de sorte que leur extension axiale respective diminue au moins dans cette zone, et le recouvrement (3) étant réalisé dans cette zone en retrait axialement vers l'intérieur en direction des ailettes de refroidissement (4) et de manière adaptée à la géométrie des ailettes de refroidissement (4).

2. Ensemble de rotor selon la revendication 1, **caractérisé en ce qu'**une hauteur axiale (H1) des ailettes de refroidissement (4) est supérieure à une hauteur axiale (H2) de la partie d'ouverture d'entrée.

3. Ensemble de rotor selon l'une quelconque des revendications précédentes, **caractérisé en ce que** le recouvrement (3) présente une partie de purge (8) adjacente à son bord extérieur radial (9) et qui s'étend de manière linéaire radialement vers l'extérieur.

4. Ensemble de rotor selon la revendication précédente, **caractérisé en ce que** le bord extérieur radial (9) du recouvrement (3) est en alignement avec un bord extérieur radial des ailettes de refroidissement (4).

5. Ensemble de rotor selon l'une quelconque des revendications précédentes, **caractérisé en ce que** les ailettes de refroidissement (4) s'étendent au mois dans une moitié radiale extérieure du dissipateur thermique (2).

6. Ensemble de rotor selon l'une quelconque des revendications précédentes, **caractérisé en ce que** les ailettes de refroidissement (4) sont réalisées d'un seul tenant au niveau du recouvrement (3) ou de la face frontale axiale du dissipateur thermique (2).

7. Ensemble de rotor selon l'une quelconque des revendications précédentes, **caractérisé en ce que** dans une vue de dessus axiale, le recouvrement (3) recouvre complètement les ailettes de refroidissement (4).

8. Ensemble de rotor selon l'une quelconque des revendications précédentes, **caractérisé en ce que** les ailettes de refroidissement (4) sont réalisées comme des ailettes de refroidissement s'étendant de manière linéaire dans la direction radiale ou comme des pales de refroidissement s'étendant de manière orientée dans le sens de la rotation.

9. Ensemble de rotor selon la revendication précédente, **caractérisé en ce que** les pales de refroidissement orientées dans le sens de la rotation présentent une forme de croissant dans une vue de dessus axiale.

10. Ensemble de rotor selon l'une quelconque des revendications précédentes, **caractérisé en ce que** le dissipateur thermique (2) présente sur sa face frontale axiale au moins une ouverture, mais en particulier une pluralité d'ouvertures, qui est en communication fluidique avec le canal de refroidissement (6).

11. Ensemble de rotor selon l'une quelconque des revendications précédentes, **caractérisé en ce qu'**un diamètre (D5) du recouvrement (3) est inférieur ou égal à un diamètre du dissipateur thermique (2) ou de l'ensemble de rotor.
